Europäisches Patentamt

(19) European Patent Office

Office européen des brevets

(11) Publication number : **0 188 514**
**B1**

(12) **EUROPEAN PATENT SPECIFICATION**

(45) Date of publication of patent specification :
11.01.89

(21) Application number : **85903436.5**

(22) Date of filing : **04.07.85**

(86) International application number :
**PCT/SE 85/00269**

(87) International publication number :
**WO/8600684 (30.01.86 Gazette 86/03)**

(51) Int. Cl.⁴ : **F 16 L 59/02**

(54) **DEVICE FOR PRODUCING PIPE SLEEVES FROM MINERAL WOOL.**

(30) Priority : **16.07.84 SE 8403722**

(43) Date of publication of application :
**30.07.86 Bulletin 86/31**

(45) Publication of the grant of the patent :
**11.01.89 Bulletin 89/02**

(84) Designated contracting states :
**AT BE CH DE FR GB IT LI LU NL**

(56) References cited :
**GB—A— 1 191 353**
**GB—A— 1 526 151**
**SE—B— 358 226**

(73) Proprietor : **ABERG, Ulf Lennart**
**Stjärnvägen 29**
**S-541 55 Skövde (SE)**

(72) Inventor : **ABERG, Ulf Lennart**
**Stjärnvägen 29**
**S-541 55 Skövde (SE)**

(74) Representative : **Inger, Lars Ulf Bosson**
**L + U INGER Patentbyra HB Garvaregatan 12**
**S-262 00 Ängelholm (SE)**

## Description

Technical field

The present invention relates to a device for producing pipe sleeves of mineral wool.

The material mineral wool possesses in addition to good insulation characteristics other advantageous properties, such as good temperature resistance, as well. As a rule, use is made of products in the form of parallelepipeds but in certain cases cylindrical tubular products are required for insulating tubes conveying heat or cooling media. Such products are known as pipe sleeves. They are used in industrial applications as well as in ordinary housing construction. They are also of interest as insulating materials for district heating lines.

The conventional method for producing pipe sleeves of mineral wool is characterized in, while using a winding machine one winds thin gauze about a core so as to form a pipe sleeve. The mineral wool is impregnated with a resin, e. g., a phenolic resin in a non-cured condition. The winding process entails winding one pipe sleeve at a time. Later on the resin in the sleeve is cured by blowing hot air therethrough. Thereafter it is often necessary to trim the outer diameter of the sleeve before cutting off the outer ends so as to achieve a pipe sleeve having the right, desired length. This is made in a sawing machine. In another sawing machine a slot extending in the longitudinal direction of the sleeve is arranged, which slot enables the sleeve to be fitted to the pipe to be insulated.

As can be deduced from the above such a production method is time-consuming since all the above operations must be carried out on a single pipe sleeve the length of which is normally less than 1 meter. If one then should like to make the production process automatic, very complicated machines are required. After all, if the internal diameter should be changed when using such an automatic machine, it is necessary to replace all cores.

It should also be made clear that the costs for such a machine are high and that is requires much space. A sophisticated timer has to be provided but even this should be available, problems arise since the raw material used entails variations within the production process. This principle of automatic winding thus results in a sensitive machine involving much downtime and poor quality yield.

Now the present invention relates to a device for producing pipe sleeves as disclosed in claim 1. The device can shortly be described as a kind continuous compression moulding, and has to some extent been disclosed in SE-B-358, 226, and GB-A-1, 526, 151. A web of noncured mineral wool on a continuously running belt conveyor is made to form a pipe sleeve by the belt with the material on top of it being bent to a pipe sleeve between two pipes : an inner one, known as a core, and an outer one, known as a moulding pipe. The belt consists advantageously of a readily flexible material. The core, the moulding pipe and the belt should be perforated to allow a hot gas, such as hot air to pass through for curing a heat-curable resin. The belt should thereby be of a mesh-type, on the one hand to give a better grip, and on the other hand to enable said penetration of hot air through at the curing stage.

Curing can be achieved by quite simply heating the entire machine and relies on heat conduction. This is an inefficient method. It is considerably more efficient to allow hot air to pass through the material. This can be achieved by e. g., conducting hot air through the inside of the core, which through holes, perforations, drilled through the core can be made to pass along the material. If now the belt and the moulding pipe are perforated, as well, the gases can be evacuated by connecting an enclosure surrounding the entire unit to the suction side of a fan. The hot air can be generated in several different ways. Even though exhaust gases can be used. Electric heating is feasible, as well.

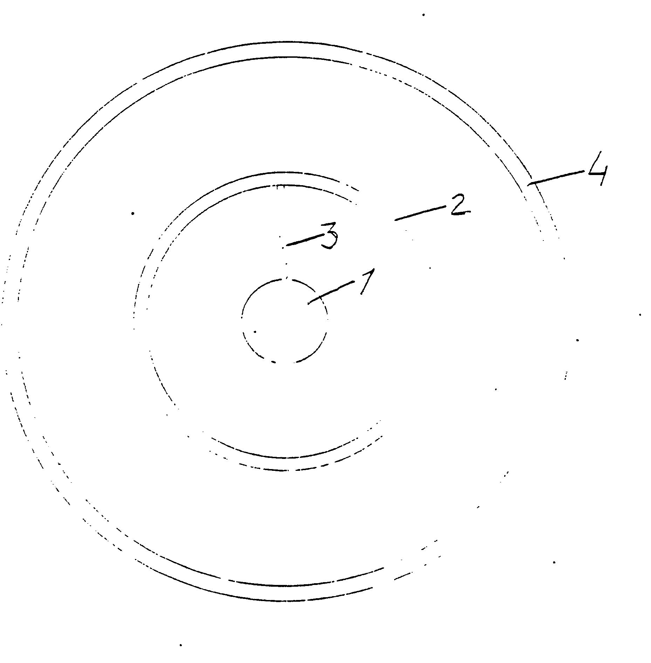

A drawing is enclosed, the only figure of which shows a section of the forming unit containing no material.

The core 1 is a pipe. The most suitable material is a steel pipe. The core is located in such a position as to be resting on a web of mineral wool directly within the inlet of the forming unit. An upwardly bent outer part of the pipe enables connection to be made for hot air.

The outer part of the forming unit is the outer moulding pipe 2 which in the same way as the core preferably consists of steel. The inlet end of this pipe 2 may be funnel-shaped. The funnel in its turn may be secured by means of stays to a stand which holds the entire unit together. The inner surface of this pipe must be made subject to an extremely fine surface treatment since at this point the friction between a belt and the pipe 2 must be kept as low as possible in order to expose the belt to as little tensile force as possible during its operation. This pipe 2 should be perforated, as well, so as to allow hot air to be blown through in either direction. The pipe 2 is also slotted. This slot is described in greater detail below.

To hold the core 1 against the pipe 2 which, as stated above, is secured by means of the funnel holder, a blade flange 3 is provided, which extends along the entire length of the core 1. It is welded to the core 1 (if a steel pipe is being used). The height of this blade flange 3 is such that the upper part of the blade flange 3 fits into the above mentioned slot in the moulding pipe 2. In this way a slot will be produced in the final pipe sleeve, when the belt carries mineral wool, which is cured as it passes through the forming unit.

An outer shell 4 is provided with a view to create a space around the outer side of the moulding pipe 2 which space is capable of being evacuated of the gases passing, and generated in connection with the curing process.

The belt in the machine is pulled with the aid of a geared motor driving a shaft around which the belt is placed. In order to avoid slippage a counter-roller is provided which, as practical experience shows, should, if possible, be rubberised so as to ensure a better grip. The drive package is positioned in such a way as to achieve a pull through the forming unit. On the opposite side a deflection roller of preferably highly cambered design should be provided. Because this, in connection with the belt drive, causes stabilisation.

When changing the product, i.e., alterning the core 1 and/or moulding pipe 2 diameter the belt is removed and the forming unit is removed out from the outer shell 4, which can be dismantled along the generatrix. A new forming unit is inserted with the aid of the rollers, and new funnel-shaped units are mounted in position once the belt has been brought through the forming unit again.

There are of course many possibilities for different embodiments. To secure the blade flange 3 to the core 1, it is for instance possible to weld a short blade flange to the opposite side. This then produces a groove on the side opposite to the slot in the pipe sleeve, which at a later stage facilitates application of the sleeve to the pipe which is to be insulated.

The choice of material is important. In the first place a belt material must be found which is capable of bearing the relatively high tensile forces encountered. In addition, the material must resist this force at an elevated temperature resulting from the curing process. Temperatures of more than 200 °C are possible. It has now been shown that use can be made of a net of aramide fibres (e. g., sold under the trade mark KEVLAR). With a view of preventing excessively strong adhesion between the mineral wool and the net (mesh) belt, it is advisable to coat and enclose this belt with a polymer of the PTFE-type material (e. g., TEFLON).

As stated above the core 1 and the moulding pipe 2 are best made of steel. With regard hereto it is important to ensure by polishing that there is a low friction between the mineral wool/belt and the moulding pipe 2 on the one side, and the mineral wool and the core 1 on the other side. The perforations provided in the core 1 and in the moulding pipe 2 to enable air to be blown through for curing reasons, should, if possible, be countersank, or may be drilled with an angled drill. The angle should be such that clearance is ensured, i. e., the axes of the perforations should be so positioned that an acute angle is formed between them and the axes of the pipe 4/core 1.

The material in the outer shell may be aluminum. It should in addition thereto be insulated on the inside in order to prevent operating personnel from being burnt. Use may preferably be made of mineral wool.

The diameter range within which pipe sleeves can be produced according to this device may be varied a lot. It is the frictional forces only, that constitutes a restriction, i. e., the tensile strength limitations of the belt are decisive. After all, the friction increases with the circumference.

## Claim

Device for producing pipe sleeves of mineral wool, comprising an endless perforated belt, and a forming unit comprising at least an inner core (1) consisting of a tube, and an outer moulding pipe (2), and means for blowing, optionally heated gas through the space between the inner core and the moulding pipe, said belt being arranged to carry a strip of mineral wool through said moulding pipe (2) and around said core (1), characterized in that the tubes forming the inner core and the moulding pipe are perforated, the blowing means blowing the said gas through the perforations of said tubes and belt, in that the belt consists of a net of aramide fibres and in that the belt is provided with a coating of a polymer of PTFE-type material.

## Patentanspruch

Vorrichtung zum Herstellen von Rohrärmeln aus Mineralwolle mit einem endlosen perforierten Band und einer Formungseinheit mit mindestens einem inneren Kern (1), welcher aus einem Rohr besteht, und einem äußeren Formrohr (2) sowie einer Einrichtung zum Einblasen von wahlweise erhitztem Gas durch den Raum zwischen dem inneren Kern und dem Formrohr, wobei das Band so angeordnet ist, daß es einen Streifen von Mineralwolle durch das Formrohr (2) und um den Kern (1) herum trägt, dadurch gekennzeichnet, daß die Rohre, welche den inneren Kern und das Formrohr bilden, perforiert sind, wobei die Einrichtung zum Einblasen das Gas durch die Perforationen der Rohre und des Bandes hindurchbläst, daß das Band aus einem Netz von Aramidfasern besteht und daß das Band mit einer Beschichtung mit einem Polymer von der Art des PTFE-Materials versehen ist.

## Revendication

Dispositif de production de fourreaux en laine minérale, comprenant une courroie perforée sans fin, et une unité de formage comprenant au moins un noyau intérieur (1) consistant en un tube, et un tuyau de moulage extérieur (2), ainsi que des moyens pour souffler éventuellement un gaz chauffé dans l'espace compris entre le noyau intérieur et le tuyau de moulage, la courroie susdite étant agencée pour emporter une bande de laine minérale à travers le tuyau de moulage (2) et tout autour du noyau (1), caractérisé en ce que les tubes constituant le noyau intérieur et le tuyau de moulage sont perforés, les moyens de soufflage susdits chassant le gaz à travers les perforations des tubes précités et de la courroie, en ce que la courroie consiste en un filet de fibres d'aramide, et en ce que la courroie comporte un revêtement d'un polymère d'une matière du type PTFE.